Europäisches Patentamt

European Patent Office

Office Européen des brevets

(11) Veröffentlichungsnummer: **0 230 527 B1**

# EUROPÄISCHE PATENTSCHRIFT

(45) Veröffentlichungstag der Patentschrift:
02.01.91 Patentblatt 91/01

(51) Int. Cl.$^5$: **B60C 15/04**

(21) Anmeldenummer: **86114754.4**

(22) Anmeldetag: **23.10.86**

(54) Fahrzeugluftreifen.

(30) Priorität: **31.01.86 DE 3602874**

(43) Veröffentlichungstag der Anmeldung:
**05.08.87 Patentblatt 87/32**

(45) Bekanntmachung des Hinweises auf die
Patenterteilung:
**02.01.91 Patentblatt 91/01**

(84) Benannte Vertragsstaaten:
**AT BE CH DE ES FR GB GR IT LI LU NL SE**

(56) Entgegenhaltungen:
**DE-A- 2 027 274**

(56) Entgegenhaltungen:
**FR-A- 698 304**
**FR-A- 1 380 138**
**FR-A- 1 394 941**
**FR-A- 1 473 142**
**FR-A- 2 137 810**
**FR-A- 2 389 504**

(73) Patentinhaber: **Continental
Aktiengesellschaft
Königsworther Platz 1
D-3000 Hannover 1 (DE)**

(72) Erfinder: **Klose, Hans-Ulrich
Hauptstrasse 15
D-3061 Wiedensahl (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Fahrzeugluftreifen, der aus Gummi oder gummiähnlichem Material aufgebaut ist und eine Karkaßverstärkung aufweist, die in den Wülsten durch Umschlingen zug- und/oder druckfester Wulstkerne verankert ist, und bei dem die Wulstkerne einen im wesentlichen kreisrunden Querschnitt aufweisen.

In der DE-A-30 00 428 wird ein Fahrzeugrad beschrieben, bei dem der Reifen mit seinen Wülsten am radial inneren Umfang einer Felge angeordnet ist. Bei einem solchen Konstruktionsprinzip befinden sich die Dichtflächen der Reifenwülste im Innenraum des Reifens, was zu Schwierigkeiten bei der Vulkanisation des Reifens führt. Außerdem werden die in den Reifenwülsten befindlichen Wulstkerne überwiegend auf Druck und allenfalls geringfügig auf Zug beansprucht.

Zur Lösung des Vulkanisierproblems wurde in der DE-A-32 46 624 vorgeschlagen, den Reifen mit seitlich nach außen geklappten Seitenwänden und -wülsten zu vulkanisieren. Zur Montage ist dann eine gewisse Schwenkbarkeit der Reifenwülste um ihren Wulstkern erforderlich. In der DE-A 32 33 441 wird ein Verfahren beschrieben, mit dem ein derartiger Reifen auf eine einteilige Felge montiert werden kann.

Bei den bisherigen Fahrzeugrädern, bei denen die Reifenwülste am radial inneren Umfang der Felge angeordnet sind, werden überwiegend Wulstkerne mit einem solchen Querschnitt und einer solchen Festigkeit eingesetzt, wie sie von konventionellen Reifen bekannt sind, deren Wülste sich radial außen an einer Felge befinden. Diese bekannten Wulstkerne weisen ein relativ hohes Gewicht auf.

Ein Reifen gemäß dem Oberbegriff des Anspruches 1 ist z.B. durch die FR-A-2 37810 bekannt. Der Erfindung liegt die Aufgabe zugrunde, einen Fahrzeugluftreifen der eingangs genannten Art mit Wulstkernen relativ hoher Druck- und Biegefestigkeit anzugeben, die möglichst leicht sein sein sollten und eine Schwenkbarkeit der Wülste um die Wulstkerne ermöglichen.

Diese Aufgabe wird erfindungsgemäß durch die Merkmale des Anspruches 1 gelöst.

Durch die Erfindung wird nicht nur ein wesentlich leichterer Reifen erhalten, sondern er wird auch erheblich billiger in der Herstellung, weil weniger Stahl benötigt wird. Weiterhin erhält der Konstrukteur mehr Möglichkeiten der Gestaltung der Wulstkernquerschnitte, so daß er sie den jeweiligen Anforderungen anpassen kann.

Der Kerngedanke der Erfindung besteht darin, den Wulstkern so zu gestalten, daß der aus Stahldraht bestehende Querschnitt, der überwiegend zur Biegefestigkeit des Kernrings beiträgt, ein möglichst großes Flächenträgheitsmoment aufweisen sollte. Dies wird dadurch erreicht, daß die überwiegende Masse des aus Stahldraht bestehenden Teiles des Wulstkerns mit möglichst großem Abstand zur Biegelinie bzw. Biegeebene angeordnet wird. Dies ist bei solchen Querschnitten verwirklicht, bei denen die Erstreckung in radialer Richtung des Wulstkernrings größer ist als in axialer. Damit zusätzlich zu der so erhaltenen großen Biegefestigkeit des Wulstkerns eine Schwenkbarkeit des Reifenwulstes um den Wulstkern erzielt wird, wird der innere aus Stahldraht bestehende Bereich des Wulstkerns mit einem möglichst leichten Material umspritzt, bis sich insgesamt ein runder Querschnitt für den Wulstkern ergibt. Für eine leichte Schwenkbarkeit ist es erforderlich, den Wulstkern nicht-haftend im Reifenwulst einzubetten. Dies kann durch an sich bekannte Maßnahmen geschehen.

Nachfolgend wird ein Ausführungsbeispiel der Erfindung anhand einer Zeichnung näher erläutert:

Es zeigt:

Fig. 1 ein Fahrzeugrad, bei dem die Reifenwülste mit dem erfindungsgemäßen Wulstkernen am radial inneren Umfang der Felge angeordnet sind, in einem radialen Teilschnitt,

Fig. 2 einen vergrößerten Ausschnitt eines Reifenwulstes mit einem Wulstkernquerschnitt, dessen innerer Bereich im wesentlichen aus einem hochgestellten Rechteck mit gewölbten Schmalseiten besteht,

Fig. 3 einen vergrößerten Ausschnitt eines Reifenwulstes mit einem Wulstkernquerschnitt, dessen innerer Bereich im wesentlichen aus einem Sechseck mit abgeschnittenen Seitenbereichen besteht,

Fig. 4 einen Reifenwulst, bei dem der innere Bereich des Kernquerschnittes rechteckig ausgebildet ist,

Fig. 5 einen Reifenwulst, bei dem der innere Bereich des Kernquerschnitts von einem gleichschenkeligen Dreieck gebildet wird,

Fig. 6 einen Reifenwulst, bei dem der innere Bereich des Kernquerschnitts von einem hochgestellten Oval gebildet wird,

Fig. 7 einen Reifenwulst, der radial außen an einer Felge angeordnet ist, mit einem Wulstkernquerschnitt, dessen innerer Bereich von einem hochgestellten Parallelogramm gebildet wird.

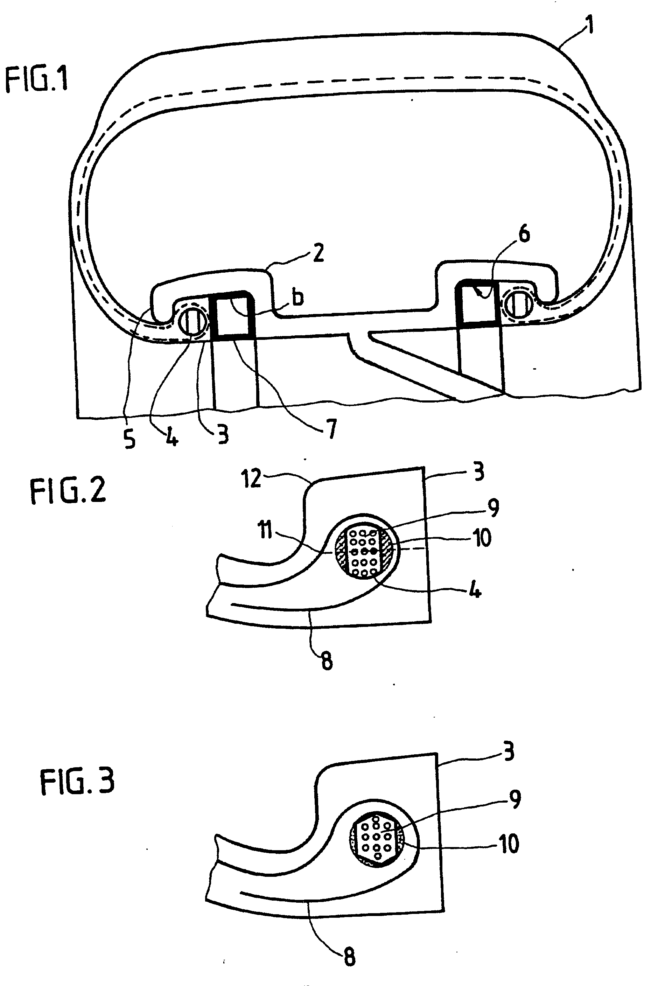

Bei dem in Fig. 1 dargestellten Fahrzeugrad ist ein im wesentlichen aus Gummi oder gummiähnlichen Stoffen aufgebauter Fahrzeugluftreifen 1 derart auf einer einteiligen Felge 2 montiert, daß sich die Reifenwülste 3 mit darin eingebetteten Wulstkernen 4 am radial inneren Umfang der Felge 2 neben sich im wesentlichen nach radial innen erstreckenden Felgenhörnern 5 befinden.

Eine als Montagehochbett dienende Vertiefung 6 wird in an sich bekannter Weise von einem Abdeckring 7 verdeckt. Beim Reifen kann es sich um einen Gürtelreifen mit einer (gestrichelt gezeichneten) Radialkarkasse 8 handeln, die in den Wülsten 3 durch Umschlingen der zug-und druckfesten Wulstkerne 4 verankert ist.

Figur 2 zeigt einen vergrößerten Reifenwulstausschnitt, des Reifens 1 der Figur 1. Eine Karkasse 8 aus üblichen Festigkeitsträgern ist im Wulst 3 durch Umschlingen des Wulstkerns 4 verankert. Der Wulstkern 4 besteht aus zwei unterschiedlich aufgebauten Bereichen, einem inneren Bereich 9, der aus Stahldrähten oder Stahlkabeln aufgebaut ist, und einem äußeren Bereich 10, der aus einem möglichst leichten Kunststoff besteht. Der innere Bereich 9 weist im Querschnitt im wesentlichen die Form eines hochgestellten Rechtecks auf, wobei die Schmalseiten jedoch bereits derart nach außen gekrümmt sind, daß sie einen Teil des kreisförmigen Randes des Gesamtkernrings 4 bilden. Durch eine derartige Anordnung ergeben sich relativ große Massen, die einen vergrößerten Abstand zur Biegeebene 11 aufweisen, so daß der gesamte Wulstkernring 4 in radialer Richtung eine erhöhte Biegesteifigkeit erhält. Durch den zweiteiligen äußeren Bereich 10 des Wulstkerns 4 wird der Querschnitt zu einer Kreisfläche ergänzt.

Der aus einem leichten Gummi oder Kunststoff bestehende äußere Bereich 10 kann z.B. durch Anspritzen an den inneren Bereich hergestellt werden. Der Gesamtkern 4 ist nicht-haftend im Reifenwulst 3 eingebettet. Durch die vorgenannten Maßnahmen erhält man einen äußerst biegesteifen Wulstkern 4, der außerdem gewichtsreduziert ist und weiterhin eine Schwenkbarkeit des Wulstes gewährleistet.

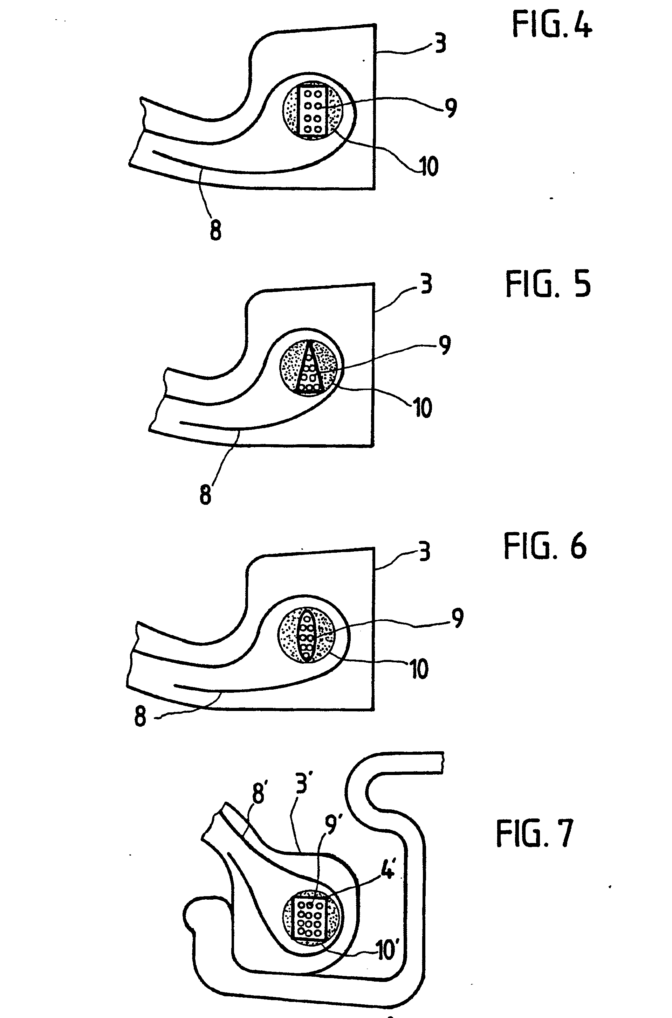

Die Figuren 3 bis 6 unterscheiden sich gegenüber dem Beispiel der Fig. 2 lediglich durch eine andere geometrische Form des inneren Bereichs 9 des Wulstkerns 4. So besteht in der Figur 3 der innere Bereich 9 aus einem Sechseck, bei dem die zwei senkrechten Seiten gegenüber den anderen verlängert sind. In Fig. 4 stellt der innere Bereich 9 ein schmales, hochgezogenens Rechteck dar, das durch den äußeren Bereich 10 wiederum zu einer Kreisform für den Gesamtkern ergänzt ist. Beim Beispiel der Figur 5 wird der innere Bereich 9 von einem gleichschenkeligen Dreieck gebildet. In Figur 6 ist eine weitere Variante dargestellt, bei der der innere Bereich 9 von einem hochgestellten Oval gebildet wird.

Anhand der Figur 7 soll erläutert werden, daß die Erfindung grundsätzlich auch bei solchen Reifen anwendbar ist, deren Wülste radial außen an einer Felge angeordnet sind. Die Schwenkbarkeit eines Wulstes ist hier bei den sogenannten Drehwülsten gefordert, die eingesetzt werden, wenn sich in der Mitte der Felge ein Stützteil für einen Notlauf befindet, wie es z. B. beim Fahrzeugrad der DE-A- 33 38 971 der Fall ist. Der Wulstkern 4' besteht wiederum aus einem inneren Bereich 9', der aus Stahldrähten oder Stahlseilen aufgebaut ist, und der im Querschnitt ein hochgestelltes Viereck darstellt. Selbstverständlich kommen auch die anderen vorstehend beschriebenen Querschnitte in Frage. Der äußere Bereich 10' besteht wieder aus einem leichten Gummi oder Kunststoff und ergänzt den inneren Bereich 9' zu einem kreisförmigen Querschnitt für den Gesamtkern 4'. Der Kern 4' ist wieder nicht-haftend im Wulst 3' eingebettet und von einer Karkasse 8' umgeben.

## Ansprüche

1. Fahrzeugluftreifen, der aus Gummi oder gummiähnlichem Material aufgebaut ist und eine Karkaßverstärkung aufweist, die in den Wülsten (3) durch Umschlingen zug- und/oder druckfester Wulstkerne (4, 4') verankert ist, und bei dem die Wulstkerne (4, 4') einen im wesentlichen kreisrunden Querschnitt aufweisen und jeder Wulskern (4, 4') in seinem inneren Bereich (9, 9') aus Stahl oder einem Material ähnlich hoher Festigkeit aufgebaut ist, wobei der innere Bereich (9, 9') von einem äußeren Bereich (10, 10') mit einem Material geringeren Gewichts zu einem Kreisquerschnitt für den Gesamtkern (4, 4') ergänzt ist **dadurch gekennzeichnet,** daß dieser innere Bereich (9, 9') sich durch einen Querschnitt auszeichnet, der in radialer Richtung des Kernrings (4, 4') eine größere Erstreckung aufweist als in axialer, und daß der Gesamtwulstkern (4, 4') nichthaftend im Reifenwulst eingebettet ist.

2. Fahrzeugluftreifen nach Anspruch 1, dadurch gekennzeichnet, daß der innere Bereich (9, 9') des Wulstkerns (4, 4') einen Querschnitt aufweist, der ein Rechteck, ein regelmäßiges Sechseck oder einen Kreis mit abgeschnittenen Seitenbereichen, ein gleichschenkliges Dreieck, ein Paralellogramm oder ein Oval darstellt.

3. Fahrzeugluftreifen nach Anspruch 1, dadurch gekennzeichnet, daß der äußere Bereich (10, 10') des Wulstkerns (4, 4') aus Gummi oder Kunststoff besteht.

4. Fahrzeugluftreifen nach Anspruch 1, dadurch gekennzeichnet, daß er mit seitlich nach außen geschwenkten Seitenwänden und Wülsten vulkanisiert ist und daß sich in der Betriebsstellung die Dichtflächen (12) am Wulst (3) für eine Anlage an der Felge (2) im Innenraum des Reifens (1) befinden.

5. Fahrzeugluftreifen nach Anspruch 1, dadurch gekennzeichnet, daß sich die Dichtflächen (12) am Wulst (3') für eine Anlage an der Felge radial innen am Reifenwulst (3') befinden.

## Claims

1. Pneumatic vehicle tyre, which is formed from rubber or rubber-like material and has a carcase reinforcement, which is secured in the beads (3) by being looped around substantially inextensible and/or pressure resistant bead cores (4, 4'), and wherein the bead cores (4, 4') have a substantially circular cross-section, and each bead core (4, 4') in its inner region (9, 9') is formed from steel or from a marterial of a similarly high strength, the inner region (9, 9') being combined with an outer region (10, 10'), of a material which is lighter in weight, to form a circular cross-section for the total core (4, 4'), characterised in that this inner region (9, 9') is distinguished by a crosssection which has a greater extension in the radial direction of the core ring (4, 4') than in the axial direction, and in that the total bead core (4, 4') is embedded in the tyre bead in a non-adhesive manner.

2. Pneumatic vehicle tyre according to claim 1, characterised in that the inner region (9, 9') of the bead core (4, 4') has a cross-section which represents a rectangle, a regular hexagon or a circle with cut-off lateral regions, an equilateral triangle, a parallelogram or an oval.

3. Pneumatic vehicle tyre according to claim 1, characterised in that the outer region (10, 10') of the bead core (4, 4') is formed from rubber or plastics material.

4. Pneumatic vehicle tyre according to claim 1, characterised in that it is vulcanised with lateral walls and beads, which are pivoted laterally outwardly, and in that the sealing surfaces (12) on the bead (3) for an abutment with the rim (2) are situated in the interior of the tyre (1) in the operative position.

5. Pneumatic vehicle tyre according to claim 1, characterised in that the sealing surfaces (12) on the bead (3) for an abutment with the rim are situated radially internally on the tyre bead (3').

## Revendications

1. Pneu sans chambre pour véhicule, constitué de caoutchouc ou d'un matériau semblable au caoutchouc et présentant un renfort en carcasse qui s'ancre dans les bourrelets (3) en enlaçant des noyaux de bourrelet (4, 4') résistants à la traction et/ou à la compression, et pneu dans lequel les noyaux de bourrelet (4, 4') présentent une section sensiblement circulaire et dans lequel chaque noyau de bourrelet (4, 4') est constitué, dans sa zone intérieure (9, 9'), d'acier ou d'un matériau de résistance équivalente, étant précisé que la zone intérieure (9, 9') est complétée par une zone extérieure (10, 10'), en un matériau de poids plus faible, pour donner une section circulaire pour l'ensemble du noyau (4, 4'), caractérisé par le fait que cette zone intérieure (9, 9') se caractérise par une section qui présente une plus grande extension dans la direction radiale de l'anneau du noyau (4, 4') que dans la direction axiale et que l'ensemble du noyau (4, 4') du bourrelet est enrobé, sans y adhérer, dans le bourrelet du pneu.

2. Pneu sans chambre pour véhicule selon la revendication 1, caractérisé par le fait que la zone intérieure (9, 9') du noyau (4, 4') du bourrelet présente une section qui représente un rectangle, un hexagone régulier ou un cercle avec des zones latérales enlevées, un triangle isocèle, un parallélogramme ou un ovale.

3. Pneu sans chambre pour véhicule selon la revendication 1, caractérisé par le fait que la zone extérieure (10, 10') du noyau (4, 4') du bourrelet est constitué de caoutchouc ou de plastique.

4. Pneu sans chambre pour véhicule selon la revendication 1, caractérisé par le fait qu'on le vulcanise avec des parois latérales et des bourrelets que l'on a fait pivoter latéralement vers l'extérieur et par le fait qu'en position de service les surfaces d'étanchéité (12) du bourrelet (3) pour un appui contre la jante (2) se trouvent dans l'espace intérieur du pneu (1).

5. Pneu sans chambre pour véhicule selon la revendication 1, caractérisé par le fait que les surfaces d'étanchéité (12) du bourrelet (3') se trouvent sur le bourrelet (3') pour un appui contre la jante radialement vers l'intérieur.

FIG.1

FIG.2

FIG.3

FIG.4

3

9

10

8

FIG. 5

3

9

10

8

FIG. 6

3

9

10

8

FIG. 7

8'

3'

9'

4'

10'

6